# EUROPÄISCHE PATENTSCHRIFT

(11) **EP 3 246 652 B1**
(45) Veröffentlichungstag und Bekanntmachung des Hinweises auf die Patenterteilung: **19.02.2020**
(21) Anmeldenummer: 17166239.8
(22) Anmeldetag: 12.04.2017
(51) Int. Cl.: F28G 1/06, F23B 80/00

(54) **HEIZEINRICHTUNG**
HEATING DEVICE
DISPOSITIF DE CHAUFFAGE

(30) Priorität: 18.05.2016 AT 504612016
(43) Veröffentlichungstag der Anmeldung: 22.11.2017
(73) Patentinhaber: ÖKOFEN Forschungs- und Entwicklungsgesellschaft m.b.H., 4133 Niederkappel (AT)
(72) Erfinder: Ortner, Herbert, 4132 Lembach (AT)
(74) Vertreter: KLIMENT & HENHAPEL

(56) Entgegenhaltungen:
- EP-A2- 2 741 000
- AT-B1- 516 061
- DE-B- 1 094 912
- DE-U1- 8 604 638
- US-A- 4 825 940

## Beschreibung

Die Erfindung bezieht sich auf eine Heizeinrichtung, insbesondere Heizkessel, mit einem Brennraum zur Verbrennung von festem Brennstoff, insbesondere Biomasse, sowie einem Flammrohr, dessen Einströmbereich dem Brennraum zugewandt ist und dessen Ausströmbereich einem anschließenden Rauchgaskanal zur Abfuhr von Rauchgasen zugewandt ist, wobei in den Rauchgaskanal abwärts gerichtete Wärmetauscherrohre eines Kondensationswärmetauschers münden, deren untere Enden jeweils in einen Abgabebereich für das Kondensat münden, gemäß dem Oberbegriff von Anspruch 1.

Derartige Heizeinrichtungen dienen der Erwärmung eines Wärmeträgermediums zur Nutzung als Warmwasser oder zu Heizzwecken mithilfe der Verbrennung eines festen Brennstoffes. In der praktischen Anwendung ist dabei einerseits entscheidend, dass der Wirkungsgrad der Heizeinrichtung optimiert wird, also dass ein größtmöglicher Anteil der Verbrennungswärme auf das Wärmeträgermedium übertragen wird, und dass andererseits ein störungsfreier Betrieb mit geringstmöglichem Wartungsaufwand gewährleistet wird. Zur Erhöhung des Wirkungsgrades ist die Verwendung von Kondensationswärmetauschern bekannt, bei denen das heiße Rauchgas in abwärts gerichtete Wärmetauscherrohre eingeleitet wird, in denen das Rauchgas unter Wärmeabgabe an das die Wärmetauscherrohre umgebende Wärmeträgermedium abkühlt, und aus denen das abgekühlte Rauchgas mit Temperaturen unterhalb der Taupunkttemperatur austritt. Aufgrund der Abkühlung bis unterhalb der Taupunkttemperatur kondensiert im Rauchgas enthaltener Wasserdampf und wird im Abgabebereich als Kondensat abgegeben. Die dabei freiwerdende Kondensationswärme kann ebenfalls auf das Wärmeträgermedium übertragen werden, wodurch der Wirkungsgrad zusätzlich erhöht wird.

Eine Heizeinrichtung, bei der es sich allerdings nicht um einen Kondensationswärmetauscher handelt, ist aus der EP 2 741 000 A2 bekannt. Weitere Heizvorrichtungen wurden in der DE 10 94 912 B und der DE 86 04 638 U1 beschrieben.

Grundsätzlich ist dabei im Interesse einer möglichst hohen Wärmeabgabe an das Wärmeträgermedium eine möglichst lange Verweildauer des heißen Rauchgases innerhalb der Wärmetauscherrohre mit großer Kontaktzeit zu den Innenflächen der Wärmetauscherrohre vorteilhaft. Dabei stellt sich jedoch das Problem, dass sich an den Innenflächen der Wärmetauscherrohre verstärkt Ablagerungen und Verschmutzungen aufgrund der im Rauchgas mitgeführten Partikel und Schwebstoffe bilden, die die Wärmeübertragung wiederum beeinträchtigen und den Wirkungsgrad der Heizeinrichtung im Laufe der Zeit verringern. Dieses Problem stellt sich insbesondere bei der Verbrennung von festen Brennstoffen, insbesondere Biomasse, aufgrund des im Rauchgas enthaltenen hohen Anteils an Verbrennungspartikel, die im Laufe der Zeit starke Ablagerungen an allen angeströmten Komponenten verursachen. Die abgelagerten Partikel verhindern einen effizienten Wärmetransfer, wobei vermutet wird, dass die im Rauchgas enthaltenen Partikel eine thermisch isolierende Schicht sowohl innerhalb der Strömung, als auch in Form der erwähnten Ablagerungen bilden. Bei bislang bekannten Systemen mit Kondensationswärmetauschern, die für gasförmige Brennstoffe optimiert wurden, stellen Verbrennungspartikel in der Regel kein Problem dar. Eine Anwendung dieser Systeme auf feste Brennstoffe führt jedoch zu erhöhtem Wartungsaufwand und Störungsanfälligkeit.

Das Ziel der vorliegenden Erfindung besteht somit darin eine Heizeinrichtung bereitzustellen, mit der eine dauerhaft effiziente Übertragung der Verbrennungswärme fester Brennstoffe auf das Wärmeträgermedium mithilfe von Kondensationswärmetauschern sichergestellt werden kann und der Wartungsaufwand reduziert wird.

Dieses Ziel wird mithilfe der Merkmale von Anspruch 1 erreicht. Anspruch 1 bezieht sich dabei auf eine Heizeinrichtung, insbesondere Heizkessel, mit einem Brennraum zur Verbrennung von festem Brennstoff, insbesondere Biomasse, sowie einem Flammrohr, dessen Einströmbereich dem Brennraum zugewandt ist und dessen Ausströmbereich einem anschließenden Rauchgaskanal zur Abfuhr von Rauchgasen zugewandt ist, wobei in den Rauchgaskanal abwärts gerichtete Wärmetauscherrohre eines Kondensationswärmetauschers münden, deren untere Enden jeweils in einen Abgabebereich für das Kondensat münden, und im Inneren der Wärmetauscherrohre jeweils ein zum jeweiligen Wärmetauscherrohr koaxial angeordneter Verdrängungszylinder vorgesehen ist, und zwischen der Innenfläche des Wärmetauscherrohres und der Außenfläche des Verdrängungszylinders jeweils ein schraubenfederförmig mit einem Windungsabstand A ausgeführter Verwirbelungskörper angeordnet ist. Erfindungsgemäß wird hierbei vorgeschlagen, dass der Verdrängungszylinder und der Verwirbelungskörper in axialer Richtung des jeweiligen Wärmetauscherrohres um eine Hubhöhe H, die dem Windungsabstand A entspricht oder ihn übersteigt, beweglich gelagert sind, wobei der Verwirbelungskörper eines Wärmetauscherrohres über eine Aufhängung mit radialem Spiel zur Innenfläche des Wärmetauscherrohres und der Außenfläche des Verdrängungszylinders angeordnet ist.

Mithilfe der Anordnung des Verdrängungszylinders mit dem den Verdrängungszylinder umgebenden Verwirbelungskörper gelingt es die Verweildauer des heißen Rauchgases innerhalb eines Wärmetauscherrohres und die Kontaktzeit zu den Innenflächen des Wärmetauscherrohres so zu erhöhen, dass heißes Rauchgas mit Temperaturen bis zu 800°C in den Kondensationswärmetauscher eingeleitet und über übliche Bauhöhen von gattungsgemäßen Heizeinrichtungen auf etwa 40°C abgekühlt werden kann, ohne dass es zusätzlicher Wärmetauscher bedarf. Das Rauchgas bewegt sich dabei zwischen dem Verdrängungszylinder und der Innenfläche eines Wärmetauscherrohres, wobei es vom schraubenfederförmig ausgeführten Verwirbelungskörper verwirbelt wird.

Um der Bildung von Ablagerungen, die den Wirkungsgrad erheblich absenken würden, entgegen zu wirken ist erfindungsgemäß ferner vorgesehen, dass der Verdrängungszylinder und der Verwirbelungskörper in axialer Richtung des jeweiligen Wärmetauscherrohres um eine Hubhöhe H, die dem Windungsabstand A entspricht oder ihn übersteigt, beweglich gelagert ist. Der Windungsabstand A ist dabei der Abstand zweier aufeinanderfolgender Windungen des schraubenfederförmig ausgeführten Verwirbelungskörpers. Im Zeitabstand weniger Stunden wird dabei während des Betriebes der Heizeinrichtung automatisiert die Anordnung des Verdrängungszylinders und des Verwirbelungskörpers um eine dem Windungsabstand A zumindest entsprechende Hubhöhe H angehoben, wodurch Ablagerungen gelockert werden und in Richtung des Abgabebereiches abfallen. Auf diese Weise wird eine dauerhaft effiziente Übertragung der Verbrennungswärme fester Brennstoffe auf das Wärmeträgermedium mithilfe von Kondensationswärmetauschern sichergestellt.

Die Entfernung von Ablagerungen wird verbessert, indem der Verwirbelungskörper eines Wärmetauscherrohres über eine Aufhängung mit radialem Spiel zur Innenfläche des Wärmetauscherrohres und der Außenfläche des Verdrängungszylinders angeordnet ist. Dadurch schlägt der Verwirbelungskörper während der Hubbewegung an die Innenfläche des Wärmetauscherrohres und die Außenfläche des Verdrängungszylinders an, sodass Ablagerungen nicht nur abgeschabt sondern gewissermaßen abgeschlagen werden.

Gemäß einer bevorzugten Ausführungsform wird vorgeschlagen, dass die Verdrängungszylinder jeweils mit ihrem dem Abgabebereich zugewandten Ende auf einer Hebeeinrichtung ruhen, und am jeweils dem Rauchgaskanal zugewandten Ende der Verdrängungszylinder die Aufhängung für den ihm jeweils zugeordneten Verwirbelungskörper befestigt ist. Die Hebeeinrichtung hebt und senkt somit den Verdrängungszylinder gemeinsam mit dem Verwirbelungskörper, da die Verdrängungszylinder auf der Hebeeinrichtung ruhen und die Aufhängung der Verwirbelungskörper auf dem jeweils dem Rauchgaskanal zugewandten Ende der Verdrängungszylinder befestigt ist. Die Mechanik der Hebeeinrichtung befindet sich somit nicht im heißen Rauchgasstrom im Bereich des Rauchgaskanals, sondern im Abgabebereich der Wärmetauscherrohre, in dem gemäßigtere Temperaturen herrschen.

In der praktischen Ausführung der erfindungsgemäßen Heizeinrichtung hat sich ferner bei den üblichen Baugrößen derartiger Heizeinrichtungen die Anordnung der Wärmetauscherrohre in zwei Reihen zu jeweils drei Wärmetauscherrohren als vorteilhaft erwiesen, die von einer Hebeeinrichtung bewegt werden. Folglich erweist sich die Anordnung eines Vielfachen von sechs Wärmetauscherrohren als vorteilhaft, also etwa von zwölf oder achtzehn Wärmetauscherrohren.

Um den Hebevorgang und vor allem die Senkbewegung der Verdrängungszylinder und der Verwirbelungskörper zu koordinieren wird des Weiteren vorgeschlagen, dass die jeweils dem Rauchgaskanal zugewandten Enden der Verdrängungszylinder über Querträger miteinander verbunden sind. Der Querträger kann dabei etwa an den jeweiligen Aufhängungen befestigt sein. Auf diese Weise wird auch die Geräuschentwicklung der mit Spiel angeordneten Verwirbelungskörper im Zuge der Hebe- und Senkbewegungen verringert. Insbesondere kann vorgesehen sein, dass der Querträger jeweils die drei Verdrängungszylinder der in einer Reihe angeordneten Wärmetauscherrohre verbindet.

Um die Reinigung der Wärmetauscherrohre zu verbessern wird des Weiteren vorgeschlagen, dass oberhalb der Wärmetauscherrohre Abgabedüsen für eine Reinigungsflüssigkeit angeordnet sind, die jeweils auf die dem Rauchgaskanal zugewandten Enden der Verdrängungszylinder gerichtet sind, wobei die dem Rauchgaskanal zugewandten Enden der Verdrängungszylinder jeweils als napfförmige Aufnahmen für die Reinigungsflüssigkeit ausgeführt sind. Die Abgabedüsen sprühen die Reinigungsflüssigkeit, vorzugsweise Wasser, auf die napfförmigen Aufnahmen, die sich in weiterer Folge mit der Reinigungsflüssigkeit füllen, sodass die Reinigungsflüssigkeit schließlich an der Außenfläche der Verdrängungszylinder abfließt.

Die gleichmäßige Befüllung der napfförmigen Aufnahmen mit der Reinigungsflüssigkeit wird verbessert, indem die Aufhängung im Bodenbereich der napfförmigen Aufnahme befestigt ist und innerhalb der napfförmigen Aufnahme angeordnete Durchtrittsöffnungen für die Reinigungsflüssigkeit aufweist. Die im Bodenbereich der napfförmigen Aufnahme befestigte Aufhängung beeinträchtigt ansonsten die gleichmäßige Befüllung der napfförmigen Aufnahmen mit der Reinigungsflüssigkeit, was mithilfe der Durchtrittsöffnungen vermieden wird.

Gattungsgemäße Heizeinrichtungen sind in herkömmlicher Weise mit einem Sauggebläse versehen, das die Rauchgase vom Brennraum über den Rauchgaskanal und die Wärmetauscherrohre zu einer Abgabeöffnung in Richtung eines Kamins saugt. Das Sauggebläse ist dabei üblicher Weise in einer Kondensatwanne mit horizontaler Saugzugachse angeordnet, um die Ventilatorblätter des Sauggebläses mithilfe des Kondensats und der Reinigungsflüssigkeit von Ablagerungen aus dem Rauchgas zu befreien. Die Saugzugachse entspricht dabei der Rotationsachse der Ventilatorblätter des Sauggebläses. Praktische Erfahrungen zeigen jedoch, dass die dem angesaugten Rauchgas abgewandten Seiten der Ventilatorblätter nicht ausreichend gereinigt werden und dadurch Ablagerungen auf diesen Seiten nicht dauerhaft unterbunden werden können. Daher wird vorzugsweise vorgeschlagen, dass der Abgabebereich mit einer Kondensatwanne verbunden ist oder Teil einer Kondensatwanne ist, und oberhalb der Kondensatwanne ein Sauggebläse mit vertikaler Saugzugachse angeordnet ist. Das Sauggebläse wird auf diese Weise weder dem Kondensat noch der Reinigungsflüssigkeit ausgesetzt.

Für das in der Kondensatwanne gesammelte Kondensat und die gebrauchte Reinigungsflüssigkeit ist ein Kondensatablauf vorgesehen, über den das Kondensat und die Reinigungsflüssigkeit aus dem Gehäuse der Heizeinrichtung abgeführt werden können. Da sich im Kondensatablauf Ablagerungen bilden können, die den Kondensatablauf zunehmend verstopfen, wird daher vorgeschlagen, dass die Kondensatwanne einen Kondensatablauf aufweist, der mit einem Zulauf für Spülwasser versehen ist.

Im Folgenden werden bevorzugte Ausführungsformen der Erfindung anhand der beiliegenden Zeichnungen näher beschrieben. Dabei zeigen die
Fig. 1a eine Schnittansicht durch einen erfindungsgemäßen Heizkessel in einer abgesenkten Position der Verdrängungszylinder und der Verwirbelungskörper,
Fig. 1b eine Schnittansicht durch einen erfindungsgemäßen Heizkessel in einer angehobenen Position der Verdrängungszylinder und der Verwirbelungskörper,
Fig. 2a eine vergrößerte Darstellung der Verdrängungszylinder und der Verwirbelungskörper gemäß der Ausführungsform von Fig. 1 in einer abgesenkten Position der Verdrängungszylinder und der Verwirbelungskörper,
Fig. 2b eine vergrößerte Darstellung der Verdrängungszylinder und der Verwirbelungskörper gemäß der Ausführungsform von Fig. 1 in einer angehobenen Position der Verdrängungszylinder und der Verwirbelungskörper, und die
Fig. 3 eine weitere Schnittansicht durch einen erfindungsgemäßen Heizkessel.

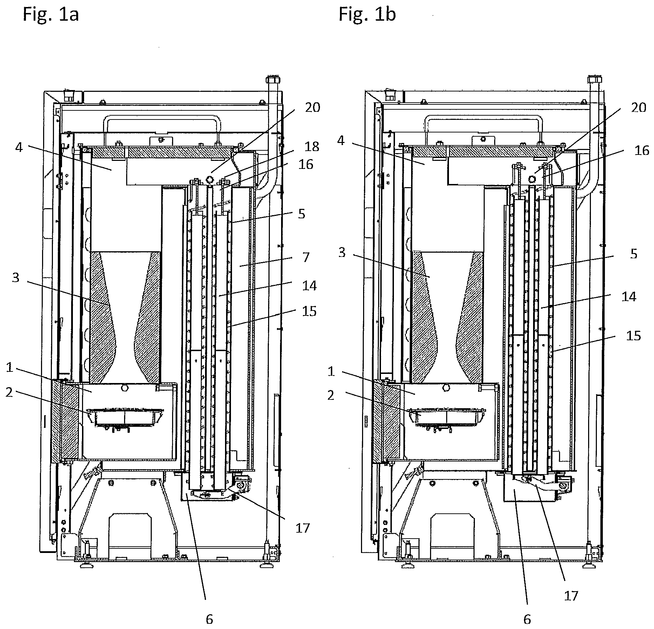

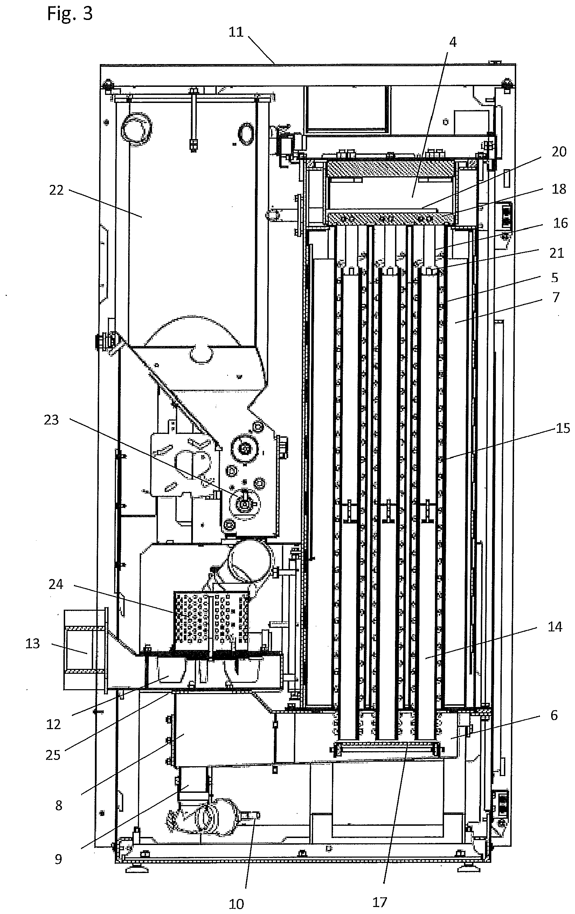

Fig. 1 zeigt eine erfindungsgemäße Heizeinrichtung in Form eines Heizkessels zur Erwärmung eines Wärmeträgermediums durch Verbrennung von festem Brennstoff, insbesondere Biomasse. In einem Brennraum 1 ist hierfür ein Brennteller 2 angeordnet, dem der feste Brennstoff etwa in Form von riesel- bzw. schüttfähigem Brenngut (z.B. Pellets) zugeführt wird. Unterhalb des Brenntellers 2 sammelt sich die Asche und wird von einer Ascheschnecke in den Aschebehälter befördert. Wie in Fig. 1 angedeutet besitzt der Brennraum 1 eine seitliche Öffnung, über die schüttfähiges Brenngut aus einem Vorratsbehälter 22 mittels einer Fördereinrichtung mit einem Förderantrieb 23 (siehe Fig. 3) zum Brennteller 2 gefördert werden kann. Die Fördereinrichtung kann etwa eine automatisch gesteuerte Förderschnecke sein. Der Vorratsbehälter 22 beinhaltet etwa eine für einen Heiztag ausreichende Menge an Brennstoff und wird daher auch als Tagesbehälter bezeichnet.

Oberhalb des Brenntellers 2 ist ein Flammrohr 3 vertikal angeordnet, dessen Einströmbereich dem Brennraum 1 zugewandt ist und in den Brennraum 1 mündet. Das Flammrohr 3 ist von entsprechender Dicke und aus einem thermisch isolierenden Material, vorzugsweise keramisches Material oder (Feuer)Beton, gefertigt. Am oberen Ende des Flammrohres 3 treten die Rauchgase in einem Ausströmbereich des Flammrohres 3 in annähernd laminarer Strömung aus und gelangen in einen anschließenden Rauchgaskanal 4. In den Rauchgaskanal 4 münden abwärts gerichtete Wärmetauscherrohre 5 eines Kondensationswärmetauschers, deren untere Enden jeweils in einen Abgabebereich 6 für das Kondensat münden. Die Wärmetauscherrohre 5 sind von flüssigkeitsgefüllten, insbesondere wassergefüllten Räumen 7 umgeben. In diesen Räumen 7 befindet sich das für Heizzwecke oder zur Nutzung als Warmwasser zu erwärmende Wärmeträgermedium.

Der Abgabebereich 6 ist mit einer Kondensatwanne 8 (siehe auch Fig. 3) verbunden, oder ist Teil einer Kondensatwanne 8. Die Kondensatwanne 8 weist einen Kondensatablauf 9 auf, der mit einem Zulauf 10 für Spülwasser versehen ist (siehe auch Fig. 3). Das Spülwasser entfernt Ablagerungen im Kondensatablauf 9, die ansonsten den Kondensatablauf 9 verstopfen könnten, und führt sie einem Abwasserkanal außerhalb des Gehäuses 11 der Heizeinrichtung zu. Oberhalb der Kondensatwanne 8 und seitlich einer Abgabeöffnung 13 ist ein Sauggebläse 12 mit vertikaler Saugzugachse angeordnet (siehe auch Fig. 3). Die Abgabeöffnung 13 kann an einem außerhalb des Gehäuses 11 verlaufenden Kamin angeschlossen werden, um Rauchgase abführen zu können. Das Sauggebläse 12 saugt die Rauchgase vom Brennraum 1 über den Rauchgaskanal 4 und die Wärmetauscherrohre 5 zur Abgabeöffnung 13 in Richtung des Kamins. In der Fig. 3 ist der Gebläsemotor 24 für den Sauggebläse 12 ersichtlich, sowie die horizontal umlaufenden Ventilatorblätter des Sauggebläses 12, die vom Boden eines Ventilatorgehäuses 25 ausreichend beabstandet sind, um den Rücklauf von Kondensat, das sich im Kamin gebildet hat, in die Kondensatwanne 8 zu ermöglichen.

Im Inneren der Wärmetauscherrohre 5 ist jeweils ein zum jeweiligen Wärmetauscherrohr 5 koaxial angeordneter Verdrängungszylinder 14 vorgesehen, sodass zwischen der Innenfläche des Wärmetauscherrohres 5 und der Außenfläche des Verdrängungszylinders 14 ein Ringkanal mit einem kreisringförmigen Querschnitt bildet, durch den die Rauchgase strömen. In diesem Ringkanal ist jeweils ein schraubenfederförmig mit einem Windungsabstand A ausgeführter Verwirbelungskörper 15 angeordnet. Das Rauchgas wird in seiner abwärts gerichteten Bewegung in Richtung des Abgabebereiches 6 zwischen dem Verdrängungszylinder 14 und der Innenfläche des betreffenden Wärmetauscherrohres 5 vom schraubenfederförmig ausgeführten Verwirbelungskörper 15 verwirbelt.

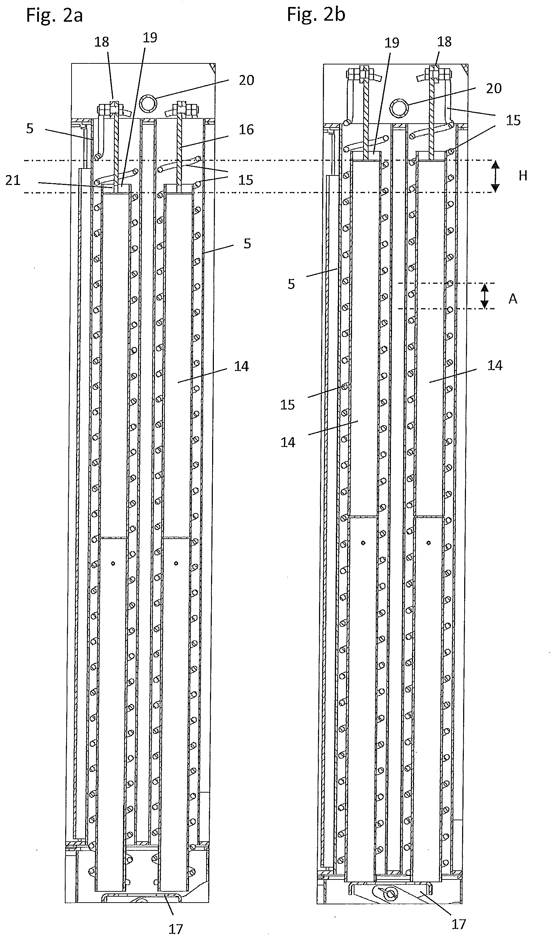

Der Verwirbelungskörper 15 eines Wärmetauscherrohres 5 ist dabei über eine Aufhängung 16 mit radialem Spiel zur Innenfläche des Wärmetauscherrohres 5 und zur Außenfläche des Verdrängungszylinders 14 angeordnet. Der Verdrängungszylinder 14 und der Verwirbelungskörper 15 sind außerdem in axialer Richtung des jeweiligen Wärmetauscherrohres 5 um eine Hubhöhe H, die dem Windungsabstand A entspricht oder ihn übersteigt, beweglich gelagert (siehe Fig. 2). Aufgrund des radialen Spiels des Verwirbelungskörpers 15 innerhalb des Ringraums zwischen dem Verdrängungszylinder 14 und der Innenfläche des Wärmetauscherrohres 5 schlägt der Verwirbelungskörper 15 während der Hubbewegung an die Innenfläche des Wärmetauscherrohres 5 und die Außenfläche des Verdrängungszylinders 14 an, sodass Ablagerungen nicht nur abgeschabt sondern gewissermaßen abgeschlagen werden.

Die Verdrängungszylinder 14 ruhen jeweils mit ihrem dem Abgabebereich 6 zugewandten Ende auf einer Hebeeinrichtung 17, mit der eine Hub- und Senkbewegung der Verdrängungszylinder 14 vollzogen werden kann. Am jeweils dem Rauchgaskanal 4 zugewandten Ende der Verdrängungszylinder 14 ist die Aufhängung 16 für den ihm jeweils zugeordneten Verwirbelungskörper 15 befestigt. Die Hebeeinrichtung 17 hebt und senkt somit den Verdrängungszylinder 14 gemeinsam mit dem Verwirbelungskörper 15.

Im gezeigten Ausführungsbeispiel sind die Wärmetauscherrohre 5 in zwei Reihen zu jeweils drei Wärmetauscherrohren 5 angeordnet, sodass insgesamt sechs Wärmetauscherrohre 5 verwendet werden, die von einer Hebeeinrichtung 17 bewegt werden.

Um den Hebevorgang und vor allem die Senkbewegung der Verdrängungszylinder 14 und der Verwirbelungskörper 15 zu synchronisieren, sind die jeweils dem Rauchgaskanal 4 zugewandten Enden der Verdrängungszylinder 14 über Querträger 18 miteinander verbunden (siehe insbesondere Fig. 3). Der Querträger 18 ist dabei an den jeweiligen Aufhängungen 16 befestigt. Auf diese Weise wird auch die Geräuschentwicklung der mit Spiel angeordneten Verwirbelungskörper 15 im Zuge der Hebe- und Senkbewegungen verringert. Insbesondere verbindet der Querträger 18 jeweils die drei Verdrängungszylinder 14 der in einer Reihe angeordneten Wärmetauscherrohre 5.

Um die Reinigung der Wärmetauscherrohre 5 zu verbessern sind oberhalb der Wärmetauscherrohre 5 Abgabedüsen für eine Reinigungsflüssigkeit angeordnet sind, die jeweils auf die dem Rauchgaskanal 4 zugewandten Enden der Verdrängungszylinder 14 gerichtet sind, wobei die dem Rauchgaskanal 4 zugewandten Enden der Verdrängungszylinder 14 jeweils als napfförmige Aufnahmen 19 für die Reinigungsflüssigkeit ausgeführt sind (siehe Fig. 2). Die Abgabedüsen sind dabei entlang eines zwischen den beiden Reihen der Wärmetauscherrohre 5 verlaufenden Zufuhrrohres 20 angeordnet und sprühen die Reinigungsflüssigkeit, vorzugsweise Wasser, auf die napfförmigen Aufnahmen 19, die sich in weiterer Folge mit der Reinigungsflüssigkeit füllen, sodass die Reinigungsflüssigkeit schließlich an der Außenfläche der Verdrängungszylinder 14 abfließt. Die gleichmäßige Befüllung der napfförmigen Aufnahmen 19 mit der Reinigungsflüssigkeit wird verbessert, indem die Aufhängung 16 im Bodenbereich der napfförmigen Aufnahme 19 befestigt ist und innerhalb der napfförmigen Aufnahme 19 angeordnete Durchtrittsöffnungen 21 für die Reinigungsflüssigkeit aufweist (siehe insbesondere Fig. 3). Die im Bodenbereich der napfförmigen Aufnahme 19 befestigte Aufhängung 16 beeinträchtigt ansonsten die gleichmäßige Befüllung der napfförmigen Aufnahmen 19 mit der Reinigungsflüssigkeit, was mithilfe der Durchtrittsöffnungen 21 vermieden wird.

Um der Bildung von Ablagerungen, die den Wirkungsgrad der Heizeinrichtung erheblich absenken würden, entgegen zu wirken ist vorgesehen, dass der Verdrängungszylinder 14 und der Verwirbelungskörper 15 in axialer Richtung des jeweiligen Wärmetauscherrohres 5 um eine Hubhöhe H, die dem Windungsabstand A entspricht oder ihn übersteigt, mithilfe der Hebeeinrichtung 17 bewegt wird (siehe insbesondere Fig. 2). Im Zeitabstand weniger Stunden wird dabei während des Betriebes der Heizeinrichtung automatisiert die Anordnung des Verdrängungszylinders 14 und des Verwirbelungskörpers 15 um eine dem Windungsabstand A zumindest entsprechende Hubhöhe H angehoben, wodurch Ablagerungen gelockert werden und in Richtung des Abgabebereiches 6 abfallen. Auf diese Weise wird eine dauerhaft effiziente Übertragung der Verbrennungswärme fester Brennstoffe auf das Wärmeträgermedium mithilfe des Kondensationswärmetauschers sichergestellt.

Mithilfe der Anordnung des Verdrängungszylinders 14 und dem den Verdrängungszylinder 14 umgebenden Verwirbelungskörper 15 gelingt es zudem, die Verweildauer des heißen Rauchgases innerhalb eines Wärmetauscherrohres 5 und die Kontaktzeit zu den Innenflächen des Wärmetauscherrohres 5 so zu erhöhen, dass heißes Rauchgas mit Temperaturen bis zu 800°C in den Kondensationswärmetauscher eingeleitet und über übliche Bauhöhen von gattungsgemäßen Heizeinrichtungen auf etwa 40°C abgekühlt werden kann, ohne dass es zusätzlicher Wärmetauscher bedarf.

Mithilfe der Erfindung wird daher eine Heizeinrichtung bereitgestellt, mit der eine dauerhaft effiziente Übertragung der Verbrennungswärme fester Brennstoffe auf das Wärmeträgermedium mithilfe von Kondensationswärmetauschern sichergestellt werden kann.

### Bezugszeichenliste:

- 1: Brennraum
- 2: Brennteller
- 3: Flammrohr
- 4: Rauchgaskanal
- 5: Wärmetauscherrohre
- 6: Abgabebereich
- 7: wassergefüllte Räume
- 8: Kondensatwanne
- 9: Kondensatablauf
- 10: Zulauf
- 11: Gehäuse
- 12: Sauggebläse
- 13: Abgabeöffnung
- 14: Verdrängungszylinder
- 15: Verwirbelungskörper
- 16: Aufhängung
- 17: Hebeeinrichtung
- 18: Querträger
- 19: Aufnahmen
- 20: Zufuhrrohr
- 21: Durchtrittsöffnungen
- 22: Vorratsbehälter
- 23: Förderantrieb
- 24: Gebläsemotor
- 25: Ventilatorgehäuse

## Patentansprüche

1. Heizeinrichtung, insbesondere Heizkessel, mit einem Brennraum (1) zur Verbrennung von festem Brennstoff, insbesondere Biomasse, sowie einem Flammrohr (3), dessen Einströmbereich dem Brennraum (1) zugewandt ist und dessen Ausströmbereich einem anschließenden Rauchgaskanal (4) zur Abfuhr von Rauchgasen zugewandt ist, wobei in den Rauchgaskanal (4) abwärts gerichtete Wärmetauscherrohre (5) eines Kondensationswärmetauschers münden, deren untere Enden jeweils in einen Abgabebereich (6) für das Kondensat münden, **dadurch gekennzeichnet, dass** im Inneren der Wärmetauscherrohre (5) jeweils ein zum jeweiligen Wärmetauscherrohr (5) koaxial angeordneter Verdrängungszylinder (14) vorgesehen ist, und zwischen der Innenfläche des Wärmetauscherrohres (5) und der Außenfläche des Verdrängungszylinders (14) jeweils ein schraubenfederförmig mit einem Windungsabstand A ausgeführter Verwirbelungskörper (15) angeordnet ist, und, dass der Verdrängungszylinder (14) und der Verwirbelungskörper (15) in axialer Richtung des jeweiligen Wärmetauscherrohres (5) um eine Hubhöhe H, die dem Windungsabstand A entspricht oder ihn übersteigt, beweglich gelagert sind, wobei der Verwirbelungskörper (15) eines Wärmetauscherrohres (5) über eine Aufhängung (16) mit radialem Spiel zur Innenfläche des Wärmetauscherrohres (5) und der Außenfläche des Verdrängungszylinders (14) angeordnet ist.

2. Heizeinrichtung nach Anspruch 1, **dadurch gekennzeichnet, dass** die Verdrängungszylinder (14) jeweils mit ihrem dem Abgabebereich (6) zugewandten Ende auf einer Hebeeinrichtung (17) ruhen, und am jeweils dem Rauchgaskanal (4) zugewandten Ende der Verdrängungszylinder (14) die Aufhängung (16) für den ihm jeweils zugeordneten Verwirbelungskörper (15) befestigt ist.

3. Heizeinrichtung nach Anspruch 1 oder 2, **dadurch gekennzeichnet, dass** die Wärmetauscherrohre (5) in zwei Reihen zu jeweils drei Wärmetauscherrohren (5) angeordnet sind.

4. Heizeinrichtung nach einem der Ansprüche 1 bis 3, **dadurch gekennzeichnet, dass** die jeweils dem Rauchgaskanal (4) zugewandten Enden der Verdrängungszylinder (14) über Querträger (18) miteinander verbunden sind.

5. Heizeinrichtung nach Anspruch 3 und 4, **dadurch gekennzeichnet, dass** der Querträger (18) jeweils die drei Verdrängungszylinder (14) der in einer Reihe angeordneten Wärmetauscherrohre (5) verbindet.

6. Heizeinrichtung nach einem der vorhergehenden Ansprüche, **dadurch gekennzeichnet, dass** oberhalb der Wärmetauscherrohre (5) Abgabedüsen für eine Reinigungsflüssigkeit angeordnet sind, die jeweils auf die dem Rauchgaskanal (4) zugewandten Enden der Verdrängungszylinder (14) gerichtet sind, wobei die dem Rauchgaskanal (4) zugewandten Enden der Verdrängungszylinder (14) jeweils als napfförmige Aufnahmen (19) für die Reinigungsflüssigkeit ausgeführt sind.

7. Heizeinrichtung nach Anspruch 6, **dadurch gekennzeichnet, dass** die Aufhängung (16) im Bodenbereich der napfförmigen Aufnahme (19) befestigt ist und innerhalb der napfförmigen Aufnahme (19) angeordnete Durchtrittsöffnungen (21) für die Reinigungsflüssigkeit aufweist.

8. Heizeinrichtung nach einem der Ansprüche 1 bis 7, **dadurch gekennzeichnet, dass** der Abgabebereich (6) mit einer Kondensatwanne (8) verbunden ist oder Teil einer Kondensatwanne (8) ist, und oberhalb der Kondensatwanne (8) ein Sauggebläse (12) mit vertikaler Saugzugachse angeordnet ist.

9. Heizeinrichtung nach Anspruch 8, **dadurch gekennzeichnet, dass** die Kondensatwanne (8) einen Kondensatablauf (9) aufweist, der mit einem Zulauf (10) für Spülwasser versehen ist.

## Claims

1. Heating device, in particular a boiler, having a combustion chamber (1) for burning solid fuel, in particular biomass, and having a flame tube (3) whose inflow region faces the combustion chamber (1) and whose outflow region faces an adjoining flue gas duct (4) for discharging flue gases, wherein downwardly directed heat exchanger tubes (5) of a condensation heat exchanger open out into the flue gas duct (4), the lower ends of said heat exchanger tubes each open out into a discharge region (6) for the condensate, **characterized in that** a displacement cylinder (14) arranged coaxially with the respective heat exchanger tube (5) is provided in each case inside the heat exchanger tubes (5), and between the inner surface of the heat exchanger tube (5) and the outer surface of the displacement cylinder (14) there is arranged in each case a turbulence body (15) which is designed in the form of a helical spring with a winding distance A, and **in that** the displacement cylinder (14) and the turbulence body (15) are movably mounted in the axial direction of the respective heat exchanger tube (5) by a stroke height H, which corresponds to or exceeds the winding distance A, wherein the turbulence body (15) of a heat exchanger tube (5) is arranged via a suspension (16) with radial play relative to the inner surface of the heat exchanger tube (5) and the outer surface of the displacement cylinder (14).

2. Heating device according to claim 1, **characterized in that** the displacement cylinders (14) each rest with their end facing the discharge region (6) on a lifting device (17), and the suspension (16) for the turbulence body (15) respectively assigned to it is fastened to the end of the displacement cylinders (14) respectively facing the flue gas duct (4).

3. Heating device according to claim 1 or 2, **characterized in that** the heat exchanger tubes (5) are arranged in two rows, each consisting of three heat exchanger tubes (5).

4. Heating device according to one of claims 1 to 3, **characterized in that** the ends of the displacement cylinders (14) facing the flue gas duct (4) in each case are connected to one another via cross members (18).

5. Heating device according to claim 3 and 4, **characterized in that** the cross member (18) connects in each case the three displacement cylinders (14) of the heat exchanger tubes (5) arranged in a row.

6. Heating device according to one of the preceding claims, **characterized in that** discharge nozzles for a cleaning liquid are arranged above the heat exchanger tubes (5) and are directed in each case towards the ends of the displacement cylinders (14) facing the flue gas duct (4), wherein the ends of the displacement cylinders (14) facing the flue gas duct (4) are designed in each case as cup-shaped receptacles (19) for the cleaning liquid.

7. Heating device according to claim 6, **characterized in that** the suspension (16) is fastened in the base region of the cup-shaped receptacle and comprises passage openings (21) for the cleaning liquid arranged inside the cup-shaped receptacle (19).

8. Heating device according to one of claims 1 to 7, **characterized in that** the discharge region (6) is connected to a condensate trough (8) or is part of a condensate trough (8), and a suction fan (12) with a vertical suction draft axis is arranged above the condensate trough (8).

9. Heating device according to claim 8, **characterized in that** the condensate trough (8) has a condensate drain (9) which is provided with an inlet (10) for rinsing water.

## Revendications

1. Installation de chauffage, en particulier chaudière de chauffage, avec une chambre de combustion (1) pour la combustion de combustible solide, en particulier de biomasse, et avec un tube-foyer (3) dont la zone d'entrée est tournée vers la chambre de combustion (1) et dont la zone de sortie est tournée vers une conduit de gaz de combustion (4) servant à évacuer les gaz de combustion, dans laquelle des tubes d'échangeur de chaleur (5) d'un échangeur de chaleur à condensation débouchent en aval dans le conduit de gaz de combustion (4) avec leur extrémité inférieure débouchant dans une zone de sortie (6) pour le condensat, **caractérisée en ce qu'**est prévu à l'intérieur de chaque tube d'échangeur de chaleur (5) un vérin de refoulement (14) coaxial du tube d'échangeur de chaleur (5) et un élément créant des turbulences (15) en forme d'hélice réalisé avec un écartement A entre les spires est disposé entre la surface intérieure du tube d'échangeur de chaleur (5) et la surface extérieure du vérin de refoulement (14), et **en ce que** le vérin de refoulement (14) et l'élément créant des turbulences (15) sont supportés de façon mobile dans le sens axial du tube d'échangeur de chaleur (5) correspondant sur une hauteur de course H qui est égale ou supérieure à l'écartement entre les spires A, l'élément créant des turbulences (15) d'un tube d'échangeur de chaleur (5) étant disposé par l'intermédiaire d'une suspension (16) avec un jeu radial par rapport à la surface intérieure du tube d'échangeur de chaleur (5) et à la surface extérieure du vérin de refoulement (14).

2. Installation de chauffage selon la revendication 1, **caractérisée en ce que** chaque vérin de refoulement (14) repose sur une installation de levage (17) à son extrémité tournée vers la zone de sortie (6) et la suspension (16) de l'élément créant des turbulences (15) qui lui est associé est fixée à l'extrémité du vérin de refoulement (14) tournée vers le conduit de gaz de combustion (4).

3. Installation de chauffage selon la revendication 1 ou 2, **caractérisée en ce que** les tubes d'échangeur de chaleur (5) sont disposés en deux rangées de trois tubes d'échangeur de chaleur (5).

4. Installation de chauffage selon l'une des revendications 1 à 3, **caractérisée en ce que** les extrémités des vérins de refoulement (14) tournées vers le conduit de gaz de combustion (4) sont reliées entre elles par des traverses (18).

5. Installation de chauffage selon les revendications 3 et 4, **caractérisée en ce que** chaque traverse (18) relie les trois vérins de refoulement (14) des tubes d'échangeur de chaleur (5) disposés dans une rangée.

6. Installation de chauffage selon l'une des revendications précédentes, **caractérisée en ce que** sont disposées au-dessus des tubes d'échangeur de chaleur (5) des buses de sortie pour un liquide de nettoyage, qui sont dirigées chacune vers les extrémités des vérins de refoulement (14) tournées vers le conduit de gaz de combustion (4), les extrémités des vérins de refoulement (14) tournées vers le conduit de gaz de combustion (4) étant réalisées chacune comme un réceptacle en forme de cuvette (19) pour le liquide de nettoyage.

7. Installation de chauffage selon la revendication 6, **caractérisée en ce que** la suspension (16) est fixée dans la zone de fond du réceptacle en forme de cuvette (19) et présente des ouvertures de passage (21) disposées à l'intérieur du réceptacle en forme de cuvette (19) pour le liquide de nettoyage.

8. Installation de chauffage selon l'une des revendications 1 à 7, **caractérisée en ce que** la zone de sortie (6) est reliée à un bac à condensat (8) ou fait partie d'un bac à condensat (8) et une soufflerie d'aspiration (12) à axe de tirage vertical est disposée au-dessus du bac à condensat (8).

9. Installation de chauffage selon la revendication 8, **caractérisée en ce que** le bac à condensat (8) présente une évacuation de condensat (9) qui est munie d'une arrivée (10) pour de l'eau de rinçage.
